# EUROPÄISCHE PATENTSCHRIFT

(11) **EP 0 586 859 B1**
(45) Veröffentlichungstag und Bekanntmachung des Hinweises auf die Patenterteilung: **23.10.1996**
(21) Anmeldenummer: 93112101.6
(22) Anmeldetag: 29.07.1993
(51) Int. Cl.: G01L 25/00

(54) **Hydraulikzylinder für eine Kraftmessmaschine**
Hydraulic cylinder for a force measuring machine
Cylindre hydraulique pour une machine de mesure de force

(30) Priorität: 10.09.1992 DE 4230250
(43) Veröffentlichungstag der Anmeldung: 16.03.1994
(73) Patentinhaber: GTM GASSMANN THEISS MESSTECHNIK GMBH, D-64342 Seeheim-Jugenheim (DE)
(72) Erfinder: Baethke, Klaus, D-64405 Fischbachtal (DE)
(74) Vertreter: Katscher, Helmut, Dipl.-Ing.

(56) Entgegenhaltungen:
- EP-A- 0 075 847
- EP-A- 0 316 763
- EP-A- 0 403 677

## Beschreibung

Die Erfindung betrifft einen Hydraulikzylinder für eine Kraftmeßmaschine, insbesondere eine Kraft-Normalmeßmaschine oder werkstoffprüfmaschine` mit einem in einem Zylinder abgedichtet geführten Arbeitskolben und mit einem Drehantrieb, der eine Relativdrehung zwischen dem Arbeitskolben und dem Zylinder um die Zylinderachse bewirkt.

Kraft-Normalmeßmaschinen, auch als Belastungsmaschinen bezeichnet, dienen zur Erzeugung von sehr genauen Kräften, die zur Kalibrierung von Kraft-Meßgeräten, insbesondere Kraftmeßdosen, eingesetzt werden.

Zur Erzeugung höherer Kräfte ist eine mechanische oder hydraulische Übersetzung der durch Meßgewichte eingeleiteten Kräfte erforderlich. Die hierfür eingesetzen Kraft-Normalmeßmaschinen bewirken diese Kraftübersetzung, wobei die Einhaltung eines konstanten Übersetzungsverhältnisses mit sehr hoher Genauigkeit verlangt wird und insbesondere störende Krafteinflüsse weitestgehend ausgeschaltet werden müssen.

Bei den für die Kalibrierung von Kraftmeßdosen höherer Nennlasten üblicherweise verwendeten hydraulischen KraftNormalmeßmaschinen ist der Arbeitskolben unter Einhaltung eines möglichst engen Dichtspaltes im Zylinder geführt. Das Übersetzungsverhältnis wird hierbei aber nicht allein durch Kolbenstirnflächen der beiden hydraulisch miteinander verbundenen Zylinder der Kraft-Normalmeßmaschine bestimmt; die wirksame Kolbenfläche wird durch das Strömungsprofil der sich im Dichtspalt zwischen dem Kolben und dem Zylinder einstellenden Leckströmung vergrößert. Auch die von der Leckströmung auf die Kolbenumfangsfläche ausgeübten hydraulischen Reibungskräfte verfälschen die Kraftübersetzung. Durch den kraftproportional veränderlichen Druck ändert sich die Spaltaufweitung.

Obwohl diese hydraulischen Reibungskräfte mit größerer Dichtspaltlänge zunehmen, werden die bekannten hydraulischen Kraft-Normalmeßmaschinen mit verhältnismäßig großer Dichtspaltlänge ausgeführt, um einerseits eine ausreichende Führung gegen ein Verkanten des Kolbens im Zylinder zu erreichen und andererseits der Leckölströmung einen größeren Widerstand entgegenzusetzen. Diesem Zweck dient auch die Maßnahme, die Dichtspaltweite möglichst gering zu wählen. Die Herstellung einer Kolben-Spaltdichtung mit großer Dichtspaltlänge und geringer Dichtspaltweite stellt aber sehr hohe Forderungen an die Fertigungsgenauigkeit und verlangt die Einhaltung sehr enger Toleranzen sowohl beim Kolbendurchmesser als auch beim Zylinderdurchmesser.

Da das sich ergebende Übersetzungsverhältnis einer solchen hydraulischen Kraft-Normalmeßmaschine nicht ausreichend genau vorher bestimmbar ist, wird bei einer bekannten Kraft-Normalmeßmaschine (DE-PS 31 38 170) an der Stirnseite des Arbeitskolbens ein im Durchmesser wesentlich kleinerer Abgleichzapfen vorgesehen, der in einer auswechselbar im Arbeitszylinder angeordneten Buchse geführt ist. Dieser Abgleichzapfen und die Buchse können nachbearbeitet oder ausgewechselt werden, um das sich ergebende Übersetzungsverhältnis zu verändern, damit ein vorgegebenes Übersetzungsverhältnis erreicht wird.

Da die Relativbewegungen zwischen dem Kolben und dem Zylinder sehr gering sind und beim stabilen Betriebszustand der Kraft-Normalmeßmaschine völlig entfallen, besteht die Gefahr, daß schon bei geringen Seitenkräften, vor allem bei einem Verkanten des Kolbens gegenüber dem Zylinder, der Flüssigkeitsfilm im Dichtspalt durchbrochen wird und es zu einer Berührung zwischen dem Kolben und dem Zylinder kommt.

Um eine solche Berührung auszuschließen und in allen Bereichen des Dichtspalts einen möglichst angenähert gleichen hydrodynamischen Schmierungszustand zu erhalten, ist es bei einem bekannten Hydraulikzylinder für eine Kraft-Normalmeßmaschine der eingangs genannten Gattung bekannt, den Kolben durch einen Drehantrieb gegenüber dem Zylinder um die Zylinderachse zu drehen. Die vorher genannten, das wirksame Übersetzungsverhältnis bzw. die übertragenen Kräfte verfälschenden Einflüsse bleiben damit aber erhalten; die wirksamen Kolbenflächen sind nicht genau bestimmbar, da ein Teil des Dichtspaltes und die ständige hydraulische Reibung des abfließenden Lecköls das Übersetzungsverhältnis bzw. die wirksame Kraft des Kolbens beeinflussen. Hinzu kommen elastische Verformungen des Kolbens und oder des Zylinders. Während die durch die einwirkende Kraft verursachte Stauchung des Kolbens zu einer Durchmesservergrößerung führt, die angenähert linear mit der Kraft ansteigt, verläuft die durch den hydraulischen Druck bewirkte Durchmesservergrößerung des Zylinders nicht linear über die Spaltlänge. Mit größer werdendem Druck vergrößert sich daher der Dichtspalt, und das Strömungsprofil verändert sich über die Führungslänge des Kolbens.

Da wegen der unvermeidbaren Leckströmung ständig Drucköl nachgefördert werden muß, führt dies zu einer Strömungsreibung in den Rohrleitungen sowie im Dichtspalt und zu einer Erwärmung des Drucköls, wodurch wiederum eine Wärmeentwicklung im Zylinder eintritt. Eine Strömungsreibung in den Rohrleitungen führt ebenfalls zu einem Druckabfall und damit zu Fehlern in der Kraftübersetzung.

Da bei den bekannten Hydraulikzylindern ein Verkanten des Kolbens vermieden werden muß, erfolgt die Krafteinleitung üblicherweise über hydrostatische Lagerkalotten. Diese müssen aber mit einem ständigen Ölstrom versorgt werden, der erheblich zur Erwärmung des Zylinders beiträgt. Die gesamte Erwärmung des Zylinders bewirkt weitere Maßänderungen der Kolbenwirkfläche.

Der Geräteaufwand für die ständig notwendige Ölzufuhr zum Zylinder und zu den Lagerkalotten ist erheblich; hierfür werden Pumpen, Servoventile, Filter und eine genau regelbare Kühleinrichtung benötigt. Die Geräuschentwicklung der Pumpen und die unvermeidbare Ölnebelbildung wirken sich störend aus. Der Bauaufwand und der Wartungsaufwand sind beträchtlich.

Ähnliche Probleme bestehen auch bei anderen hydraulischen Kraftmeßmaschinen, beispielsweise Werkstoffprüfmaschinen, insbesondere für den Baustoffbereich. Dort müssen sehr hohe Kräfte in Hydraulikzylindern erzeugt und möglichst verlustfrei auf den Prüfkörper aufgebracht werden.

Aufgabe der Erfindung ist es daher, einen Hydraulikzylinder der eingangs genannten Gattung zu schaffen, der mit geringem konstruktivem Aufwand und geringen Anforderungen an Wartung und Ölversorgung eine hohe Genauigkeit bei der Einhaltung eines konstanten Übersetzungsverhältnisses einer Kraftmeßmaschine mit minimaler Reibung ermöglicht.

Diese Aufgabe wird erfindungsgemäß dadurch gelöst, daß der Zylinder einen am Arbeitskolben dichtend anliegenden, elastisch verformbaren Dichtring trägt, und daß die Relativdrehung zwischen dem Arbeitskolben und dem Dichtring erfolgt.

Da die Abdichtung zwischen dem Dichtring und dem Arbeitskolben ohne einen Dichtspalt erfolgt, wird die wirksame Kolbenfläche ausschließlich durch den Kolbendurchmesser bestimmt. Die an dem Dichtring auftretenden Reibungskräfte werden durch die Relativdrehung aufgenommen und beeinflussen die am Arbeitskolben übertragenen Axialkräfte nicht.

Im Gegensatz zu einer Spaltdichtung besteht keine Notwendigkeit, auch die Zylinderinnenfläche mit hoher Genauigkeit und unter Einhaltung einer engen Toleranz zu bearbeiten. Es reicht vielmehr aus, die Kolbenumfangsfläche mit hoher Oberflächenfeinheit zu bearbeiten, beispielsweise durch Feinläppen, um eine sehr geringe Oberflächenrauhigkeit zu erreichen.

Die zylindrische Kolbenaußenfläche kann mit vergleichsweise geringem Fertigungsaufwand so bearbeitet werden, daß sie nur sehr geringe Rundlaufabweichungen und Oberflächenrauhigkeit aufweist. Auch der Kolbendurchmesser kann mit hoher absoluter Genauigkeit bearbeitet werden.

Wegen der elastischen Verformbarkeit der Dichtringe ist in gewissem Maße auch eine Neigung des Kolbens gegenüber der Zylinderachse zulässig; deshalb kann auf Lagerkalotten verzichtet werden, so daß eine mögliche Erwärmung durch das für die Versorgung einer Lagerkalotte erforderliche Drucköl entfällt.

Auch die ständige Ölzufuhr zum Ausgleich eines Leckölstroms in einer Spaltdichtung und das zur Druck-Regelung erforderliche Öl entfällt, weil die elastisch verformbaren Dichtringe eng an der Kolbenoberfläche anliegen. In dem hydraulischen System zur Versorgung der beiden Hydraulikzylinder dieser Kraft-Normalmeßmaschine erfolgt im Gleichgewichtszustand der beiden Hydraulikzylinder keine Ölströmung, so daß auch keine Strömungsreibung und keine Erwärmung auftreten.

Es ist zwar allgemein in der Mechanik bekannt, daß ein Reibungswiderstand gegen eine gewünschte Bewegung dadurch verringert werden kann, daß dauernd eine Gleitbewegung unterhalten wird, die rechtwinklig zu der Richtung der gewünschten Bewegung steht. Trotz dieser seit langem bestehenden Erkenntnis sind reibungsbehaftete Dichtringe bisher nicht bei Hydraulikzylindern für Kraft-Normalmeßmaschinen eingesetzt worden, weil aus der zu erwartenden Reibung eine unzulässige Verfälschung der Kraftübersetzung abgeleitet wurde.

Vorzugsweise ist der Zylinder ein drehbar gelagerter, mit dem Drehantrieb in Antriebsverbindung stehender Zylinderring, der den am Arbeitskolben dichtend anliegenden Dichtring trägt. Der Zylinderring kann in konstruktiv einfacher Weise drehbar gelagert werden. Die Bauhöhe ist gering.

Da die Notwendigkeit entfällt, den Kolben gegen ein Verkanten zu führen, können die beiden in den Zylinderring ragenden Kolben und insbesondere der Zylinderring selbst mit verhältnismäßig geringen axialen Abmessungen ausgeführt werden. Dadurch ergibt sich eine geringe Bauhöhe des Hydraulikzylinders.

In weiterer Ausbildung des Erfindungsgedankens ist vorgesehen, daß ein Führungskolben entgegengesetzt zum Arbeitskolben in den Zylinderring ragt, und daß der Zylinderring einen zweiten elastisch verformbaren Dichtring trägt, der am Führungskolben dichtend anliegt.

Damit wird in konstruktiv einfacher Weise eine Führung des Zylinderrings erreicht und zugleich eine einfache Möglichkeit der Hydrauliköl-Zuführung zum Zylinder geschaffen.

Weitere vorteilhafte Ausgestaltungen des Erfindungsgedankens sind Gegenstand weiterer Unteransprüche.

Nachfolgend werden Ausführungsbeispiele der Erfingung beschrieben, die in der Zeichnung dargestellt sind. Es zeigt jeweils in vereinfachter Darstellungsweise:
Fig. 1 eine hydraulische Kraft-Normalmeßmaschine, deren beide Hydraulikzylinder jeweils im Schnitt dargestellt sind,
Fig. 2 in einem Teilschnitt eine Ausführung mit unterschiedlichem Durchmesser des Arbeitskolbens und des Führungskolbens und
Fig. 3 in einem Teilschnitt eine Ausführungsform mit drehbar gelagertem Arbeitskolben.

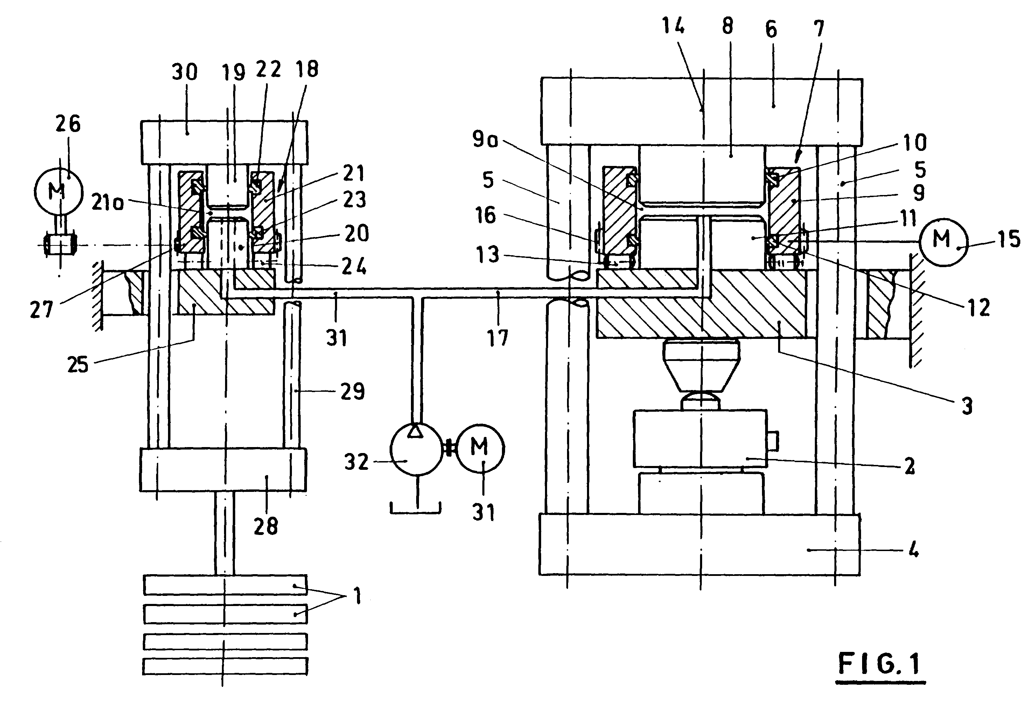

Die in Fig. 1 gezeigte Kraft-Normalmeßmaschine dient dazu, eine von Meßgewichten 1 erzeugte Kraft in einem mit sehr hoher Genauigkeit vorgegebenen Übersetzungsverhältnis in eine wesentlich größere Kraft umzusetzen, die auf einen zu kalibrierenden Kraftaufnehmer 2 wirkt. Der Kraftaufnehmer 2 ist zwischen einem gestellfesten Träger 3 und einem unteren Joch 4 aufgenommen, das über Säulen 5 mit einem oberen Joch 6 zu einem geschlossenen Rahmen verbunden ist. Zwischen dem oberen Joch 6 der Kraft-Normalmeßmaschine und dem Träger 3 ist ein Hydraulikzylinder 7 angeordnet, der den Arbeitszylinder der Kraft-Normalmeßmaschine bildet.

Ein mit dem oberen Joch verbundener Arbeitskolben 8 ragt von oben in einen Zylinderring 9. Der Zylinderring 9 trägt einen ersten elastisch verformbaren Dichtring 10, der mit seiner Dichtlippe an der Umfangsfläche des Arbeitskolbens 8 dichtend anliegt.

Ein Führungskolben 11 von gleichem Durchmesser wie der Arbeitskolben 8 ragt entgegengesetzt zu diesem in den Innenraum des Zylinderrings 9. Der Zylinderring 9 trägt in axialem Abstand zum ersten Dichtring 10 einen zweiten elastisch verformbaren Dichtring 12, der mit seiner Dichtlippe dichtend an der Umfangsfläche des Führungskolbens 11 anliegt.

Der gestellfeste Träger 3 trägt sowohl den Führungskolben 11 als auch ein im dargestellten Beispiel als Wälzlager ausgeführtes Drehlager 13, auf dem der Zylinderring 9 drehbar gelagert ist, so daß er Drehbewegungen um die Zylinderachse 14 ausführen kann. Als Drehantrieb dient ein in der Zeichnung nur schematisch angedeuteter Motor 15, der eine Verzahnung 16 am Umfang des Zylinderrings 9 antreibt. Durch eine schematisch angedeutete Ölleitung 17, die durch den Träger 3 und den Führungskolben 11 eintritt, wird der Innenraum 9a des Hydraulikzylinders 7 mit Drucköl versorgt. Die über den Arbeitskolben 8, das obere Joch 6, die Säulen 5 und das untere Joch 4 auf die Kraftmeßdose 2 ausgeübte axiale Kraft wird ausschließlich durch den Durchmesser des Arbeitskolbens 8 und den hydraulischen Druck im Innenraum 9a bestimmt; die durch die Dichtkraft am ersten Dichtring 10 auftretenden Reibungskräfte verlaufen entgegengesetzt zur Bewegungsrichtung und somit ausschließlich in Umfangsrichtung und beeinflussen daher die Axialkraft nicht.

Die Umsetzung der von den Meßgewichten 1 erzeugten Kraft in den Öldruck in der Ölleitung 17 erfolgt in einem zweiten, kleineren Hydraulikzylinder 18, der als Meßzylinder der Kraft-Normalmeßmaschine dient und im wesentlichen den gleichen konstruktiven Aufbau aufweist wie der vorher beschriebene Hydraulikzylinder 7. Auch hierbei ragt ein dem Arbeitskolben 8 vergleichbarer Meßkolben 19 von oben in den Hydraulikzylinder 18, während ein Führungskolben 20 von unten in den Hydraulikzylinder 18 ragt. Ein gemeinsamer Zylinderring 21 trägt einen ersten elastisch verformbaren Dichtring 22, der dichtend am Kolben 19 anliegt und einen zweiten elastisch verformbaren Dichtring 23, der dichtend am Führungszylinder 20 anliegt.

Der Führungszylinder 20 und ein den drehbaren Zylinderring 21 tragendes Drehlager 24 stützen sich an einem gemeinsamen gestellfesten Träger 25 ab. Ein Drehantrieb 26 steht in Antriebsverbindung mit einer Verzahnung 27 am Umfang des drehbaren Zylinderrings 21.

Die Meßgewichte 1 hängen über ein unteres Joch 28 und Säulen 29 an einem oberen Joch 30, das auf dem Kolben 19 ruht. Der Innenraum 21a des Hydraulikzylinders 18 ist über eine Druckleitung 31 mit der zum Hydraulikzylinder 7 führenden Druckleitung 17 verbunden. Zum Volumenausgleich des hydrostatischen Systems mit Hydraulikzylinder 7 und Meßzylinder 18 dient eine von einem Motor 31 angetriebene Dosier-Ölpumpe 32, deren Ausgang mit den Leitungen 17 und 31 verbunden ist. Die Pumpe 32 wird während des Betriebes auch dazu benutzt, das während eines jeden Lastwechsels benötigte Drucköl (Kompressibilitätsausgleich und von den mechanischen Verformungen der Rahmen herrührend) in das hydrostatische System zu liefern bzw. bei Entlastung herauszunehmen.

Die Dosierung kann sowohl servogeregelt als auch von Hand erfolgen. Während des Meßvorgangs kann die Öl-Dosierung ausgeschaltet bleiben, es herrscht ein vollständig hydrostatischer Zustand in den durch Leitung 17 miteinander verbundenen Zylindern 18 und 7.

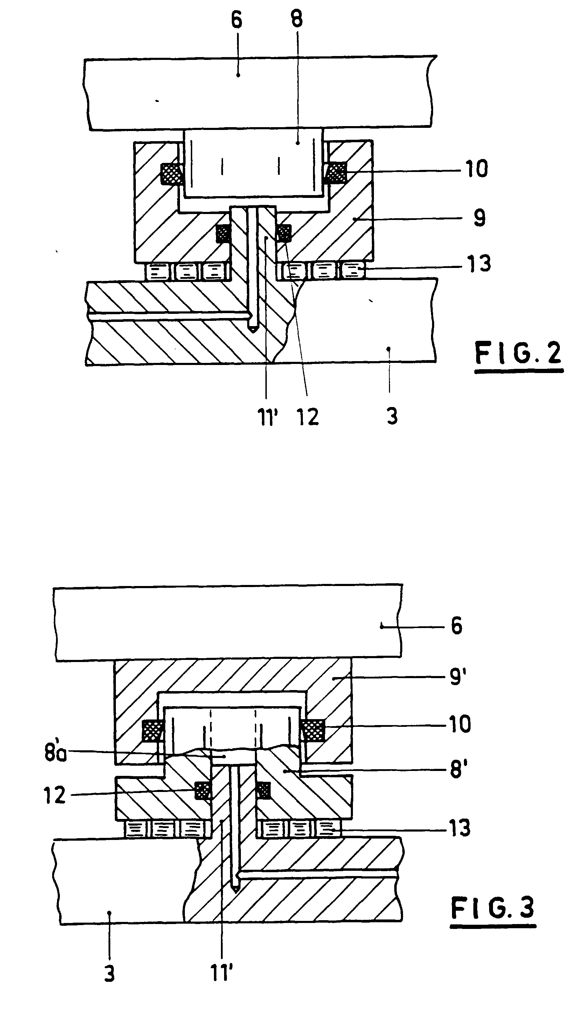

Abweichend von dem in Fig. 1 dargestellten Ausführungsbeispiel, bei dem der Arbeitskolben 8 und der Führungskolben 11 gleiche Durchmesser haben, kann der Durchmesser des Führungskolbens 11' auch kleiner als der Durchmesser des Arbeitskolbens 8 gewählt werden, wie in Fig. 2 dargestellt ist. Schon wenn der Führungskolben 11' geringfügig kleiner als der Arbeitskolben 8 ausgeführt wird und der Zylinderring 9 nur eine kleine Stufe an seinem Innendurchmesser aufweist, genügt die Beaufschlagung dieser Stufe mit Drucköl, um den Zylinderring 9 definiert gegen das Drehlager 13 zu drücken. Statt dessen kann der Durchmesserunterschied auch wesentlich größer gewählt werden, wie in Fig. 2 dargestellt. Der untere Dichtring 12, der am Führungskolben 11' anliegt, kann dabei wesentlicher kleiner und einfacher ausgeführt werden oder sogar ganz entfallen.

Fig. 3 zeigt eine Ausführungsform, die eine kinematische Umkehr der in Fig. 2 gezeigten Ausführungsform darstellt. Hierbei ist der Arbeitskolben 8' drehbar angeordnet und über das Drehlager 13 am gestellfesten Träger 3 abgestützt. Der obere Dichtring 10 ist hierbei an dem am oberen Joch 6 festgelegten Zylinder 9' angebracht und liegt dichtend an dem mit dem Drehantrieb verbundenen Arbeitskolben 8' an.

Der Führungskolben 11' ragt abgedichtet in eine zentrische Zylinderbohrung 8a' des Arbeitskolbens 8'. Die Abdichtung erfolgt vorzugsweise über den Dichtring 12.

Abweichend von dem dargestellten Ausführungsbeispiel kann auch vorgesehen werden, nur den Dichtring zu einer Drehbewegung anzutreiben und sowohl den Arbeitskolben als auch den Zylinder undrehbar auszuführen.

Für alle Ausführungsformen gilt, daß die Drehbewegung auch in Form einer oszillierenden Drehbewegung erfolgen kann.

## Patentansprüche

1. Hydraulikzylinder für eine Kraftmeßmaschine` insbesondere eine Kraft-Normalmeßmaschine oder Werkstoffprüfmaschine` mit einem in einem Zylinder (9, 9'; 21) abgedichtet geführten Arbeitskolben (8, 8'; 19) und mit einem Drehantrieb (15; 26), der eine Relativdrehung zwischen dem Arbeitskolben (8, 8'; 19) und dem Zylinder (9, 9'; 21) um die Zylinderachse (14) bewirkt, dadurch gekennzeichnet, daß der Zylinder (9, 9'; 21) einen am Arbeitskolben (8, 8'; 19) dichtend anliegenden, elastisch verformbaren Dichtring (10, 22) trägt und daß die Relativdrehung zwischen dem Arbeitskolben (8, 8'; 19) und dem Dichtring (10, 22) erfolgt.

2. Hydraulikzylinder nach Anspruch 1, dadurch gekennzeichnet, daß der Zylinder ein drehbar gelagerter, mit dem Drehantrieb (15; 26) in Antriebsverbindung stehender Zylinderring (9; 21) ist, der den am Arbeitskolben (8; 19) dichtend anliegenden Dichtring (10; 22) trägt.

3. Hydraulikzylinder nach Anspruch 2, dadurch gekennzeichnet daß ein Führungskolben (11, 11'; 20) entgegengesetzt zum Arbeitskolben (8; 19) in den Zylinderring (9; 21) ragt, und daß der Zylinderring (9; 21) einen zweiten elastisch verformbaren Dichtring (12; 23) trägt, der am Führungskolben (11; 20) dichtend anliegt.

4. Hydraulikzylinder nach Anspruch 3, dadurch gekennzeichnet, daß der Arbeitskolben (8; 19) und der Führungskolben (11; 20) gleiche Durchmesser haben.

5. Hydraulikzylinder nach Anspruch 3, dadurch gekennzeichnet, daß der Durchmesser des Führungskolbens (11') kleiner als der Durchmesser des Arbeitskolbens (8, 8') ist.

6. Hydraulikzylinder nach Anspruch 3, dadurch gekennzeichnet, daß sich der Führungskolben (11; 20) und ein den Zylinderring (9; 21) tragendes Drehlager (13; 24) an einem gemeinsamen gestellfesten Träger (3; 25) abstützen.

7. Hydraulikzylinder nach Anspruch 1, dadurch gekennzeichnet, daß der Arbeitskolben (8') drehbar angeordnet und über ein Drehlager (13) gestellfest abgestützt ist, und daß der Führungskolben (11') abgedichtet in eine zentrische Zylinderbohrung (8a') des Arbeitskolbens (8') ragt.

8. Hydraulikzylinder nach Anspruch 1, dadurch gekennzeichnet, daß die Relativdrehung zwischen dem Arbeitskolben (8, 8'; 19) und dem Dichtring (10, 22) als oszillierende Drehbewegung ausgeführt wird.

## Claims

1. A hydraulic cylinder for a force measuring machine (dynamometer), in particular a standard dynamometer or material testing device, including a sealed, guided main piston (8, 8'; 19) provided in a cylinder (9, 9'; 21) and a rotary actuator (15; 26), allowing a relative rotation between the main piston (8,8'; 19) and a cylinder (9,9'; 21) around the cylinder axis (14), characterised in that the said cylinder (9,9': 21) supports a flexible gasket (10, 22), being in close sealing contact with the said main piston (8,8'; 19) and that there is a relative rotation between the said main piston (8,8'; 19) and the said gasket (10, 22).

2. A hydraulic cylinder according to Claim 1,
characterised in that the said cylinder is a pivoted cylinder lining (9; 21) coupled to a rotary actuator (15; 26), supporting a gasket (10; 22), being in sealing contact with the main piston (8; 19).

3. A hydraulic cylinder according to Claim 2,
characterised in that a guide piston (11,11'; 20) is projecting into the said cylinder lining (9; 21) in opposite direction to the said main piston (8; 19) and that the said cylinder lining (9; 21) includes a second flexible gasket (12; 23), being in close sealing contact with the said guide piston (11; 20).

4. A hydraulic cylinder according to Claim 3,
characterised in that the said main piston (8; 19) and the said guide piston (11; 20) are of the same diameter.

5. A hydraulic cylinder according to Claim 3,
characterised in that the diameter of the said guide piston (11') is smaller than the diameter of the said main piston (8,8').

6. A hydraulic cylinder according to Claim 3,
characterised in that the said guide piston (11; 20) and a pivot bearing (13; 24) supporting the said cylinder liner (9; 21) are supported by a joint rigid support (3; 25).

7. A hydraulic cylinder according to Claim 1,
characterised in that the said main piston (8') is pivoted and supported rigidly by a pivot bearing (13) and that the said guide piston (11') is sealed in a centric cylinder bore (8a') of the said main piston (8').

8. A hydraulic cylinder according to Claim 1,
characterised in that the relative rotation between the said main piston (8,8'; 19) and the said gasket (10, 22) is designed as an oscillating rotation.

## Revendications

1. Cylindre hydraulique pour une machine dynamométrique, en particulier pour une machine dynamométrique étalon ou une machiné d'essai de matériaux, comportant un piston moteur (8, 8'; 19) guidé de manière étanche dans un cylindre (9, 9'; 21) et un dispositif d'entraînement en rotation (15; 26), qui assume une rotation relative entre le piston moteur (8, 8'; 19) et le cylindre (9, 9'; 21) autour de l'axe (14) du cylindre, caractérisé en ce que le cylindre (9, 9'; 21) porte une bague d'étanchéité (10, 22) déformable élastiquement et s'appliquant de manière étanche sur le piston moteur (8, 8'; 19) et en ce que la rotation relative se fait entre le piston moteur (8, 8; 19) et la bague d'étanchéité (10, 22).

2. Cylindre hydraulique selon la revendication 1, caractérisé en ce que le cylindre est une bague cylindrique (9; 21) montée à rotation et en liaison d'entraînement avec le dispositif d'entraînement en rotation (15; 26), ladite bague cylindrique portant la bague d'étanchéité (10; 22) qui s'applique de manière étanche sur le piston moteur (8; 19).

3. Cylindre hydraulique selon la revendication 2, caractérisé en ce qu'un piston de guidage (11, 11'; 20), opposé au piston moteur (8; 19), dépasse dans la bague cylindrique (9; 21) et en ce que la bague cylindrique (9; 21) porte une deuxième bague d'étanchéité (12; 23) déformable de manière élastique, qui s'applique de manière étanche sur le piston de guidage (11; 20).

4. Cylindre hydraulique selon la revendication 3, caractérisé en ce que le piston moteur (8; 19) et le piston de guidage (11; 20) ont les mêmes diamètres.

5. Cylindre hydraulique selon la revendication 3, caractérisé en ce que le diamètre du piston de guidage (11') est inférieur au diamètre du piston moteur (8, 8').

6. Cylindre hydraulique selon la revendication 3, caractérisé en ce que le piston de guidage (11; 20) et un coussinet de rotation (13; 24) portant la bague cylindrique (9; 21) s'appuient sur un support commun (3; 25) fixé sur le châssis.

7. Cylindre hydraulique selon la revendication 1, caractérisé en ce que le piston moteur (8') est monté à rotation et s'appuie sur un coussinet de rotation (13) fixé au châssis, et en ce que le piston de guidage (11') fait saillie de manière étanche dans un alésage cylindrique central (8a') du piston moteur (8').

8. Cylindre hydraulique selon la revendication 1, caractérisé en ce que la rotation relative entre le piston moteur (8, 8'; 19) et la bague d'étanchéité (10, 22) est réalisée sous la forme d'un mouvement rotatif oscillant.
